# EUROPÄISCHE PATENTSCHRIFT

(11) **EP 0 664 891 B1**
(45) Veröffentlichungstag und Bekanntmachung des Hinweises auf die Patenterteilung: **07.01.1998**
(21) Anmeldenummer: 92922301.4
(22) Anmeldetag: 30.10.1992
(51) Int. Cl.: G02B 3/00, G02B 5/18

(54) **VERFAHREN UND VORRICHTUNG ZUR HERSTELLUNG VON OPTISCHEN LINSEN ODER DERGLEICHEN**
PROCESS AND DEVICE FOR PRODUCING OPTICAL LENSES OR THE LIKE
PROCEDE ET DISPOSITIF POUR FABRIQUER DES LENTILLES OPTIQUES OU ANALOGUES

(30) Priorität: 15.10.1992 DE 4234740
(43) Veröffentlichungstag der Anmeldung: 02.08.1995
(73) Patentinhaber: HENTZE, Joachim, D-33189 Schlangen (DE); LISSOTSCHENKO, Vitaly N., D-33189 Schlangen (DE)
(72) Erfinder: HENTZE, Joachim, D-33189 Schlangen (DE); LISSOTSCHENKO, Vitaly N., D-33189 Schlangen (DE)
(74) Vertreter: Hanewinkel, Lorenz, Dipl.-Phys.
(86) Internationale Anmeldenummer: EP9202493
(87) Internationale Veröffentlichungsnummer: WO9409389

(56) Entgegenhaltungen:
- US-A- 4 609 259
- US-A- 5 148 322
- MEASUREMENT SCIENCE AND TECHNOLOGY Bd. 1, Nr. 8, August 1990, BRISTOL GB Seiten 759 - 766 DALY D ET AL 'The Manufacture of Microlenses by Melting Photoresist'
- LASER FOCUS WORLD Bd. 27, Nr. 6, Juni 1991, TULSA, OK, US Seiten 93 - 99 CARTS Y 'Micro-optics has macro potential' in der Anmeldung erwaehnt
- SPEKTRUM DER WISSENSCHAFT Juli 1992, DE Seiten 44 - 50 VELDKAMP W ET AL 'Binaere Optik' in der Anmeldung erwaehnt

## Beschreibung

Die Erfindung betrifft ein Verfahren zur Herstellung optisch wirksamer Strukturen, insbesondere von Linsen und Linsenarrays sowie Prismen, bei denen in mindestens einem Maskierungsschritt mit anschließendem Ätzschritt eine stufenförmige optisch wirksame Grundstruktur auf einem Substrat oberflächlich ausgebildet wird, die anschließend in einem Schmelzschritt durch eine Erwärmung bis zum Schmelzen durch kapillare Oberflächenkräfte des geschmolzenen Substrats geglättet wird.

Ein derartiges Verfahren ist aus Z: Laser Focus World, 1991, S. 93 bis 99, bekannt. In diesem Artikel ist eine Übersicht über die sechs verschiedenen gebräuchlichen Methoden zur Herstellung von Mikrolinsen und Mikrolinsenarrays beschrieben. Die am nächsten kommende Methode besteht darin, daß mittels photolithographischer Maskierung und anschließendem Ätzen auf einer Substratoberfläche eine annähernd linsenförmige Struktur erzeugt wird, die einer Wärmebehandlung unterzogen wird, wodurch ein kleiner Massentransport entsteht, der bei gewissen Materialien zur Entstehung qualitativ guter Linsen führt. Die Lithographie wird mit mehreren Masken durchgeführt, die jeweils ausgerichtet werden, so daß die Gesamtheit der nacheinander geätzten gestuften Strukturen die Linse annähernd bilden. Die Wärmebehandlung führt zu einem völligen Aufschmelzen des Linsenmaterials und auch des gesamten Trägersubstrates. Dabei erzeugt die Oberflächenspannung eine Verformung der gesamten Oberfläche und der Linsenmasse sowie des umgebenden Substrates; hierdurch tritt zwar eine Verringerung der Stufenstruktur auf, jedoch werden die optischen Parameter der Linse stark verändert, was zu optischen Fehlern und zu starken Streuungen und Abweichungen der Linsencharakteristiken bezüglich einer jeweils vorgegebenenen Charakteristik führt.

Weiterhin sind aus Z: Spektrum der Wissenschaft, 1992, S.44-50, Veldkamp u.a., Binäre Optik, bekannt, eine planare diffraktive Linsen auf der Planarseite einer planar-konvexen refraktiven Linse einzuätzen, wobei die entgegengesetzten Farbaberrationen der refraktiven und der diffraktiven Optik sich gegenseitig kompensieren und eine Farbtreue über einen breiten Spektralbereich erbracht wird. Die eingeätzte refraktive Linse erzeugt jedoch durch ihre geätzten Stufenstirnflächen Streulicht, das den Abbildungskontrast vermindert. Um diesen Fehler über einen großen Wellenlängenbereich zu beheben, ist vorgesehen, sehr viele Maskierungs- und Ätzschritte, z.B. bis zu 12, anzuwenden, wobei mit abnehmender Stufenhöhe zu ätzen ist. Dies bedeutet einen hohen Herstellungsaufwand und führt zu erheblichen Ausschußquoten.

Es ist Aufgabe der Erfindung, ein Verfahren und eine Vorrichtung zu offenbaren, die die industrielle Herstellung von strukturierten optischen Anordnungen, insbesondere Linsenarrays, mit hoher Präzision und engen Toleranzen der optischen Daten gestattet, sowie damit hergestellten neuartigen optischen Strukturen zu offenbaren.

Die Lösung der Aufgabe besteht darin, daß in dem Schmelzschritt das Substrat, das die Grundstruktur trägt, in eine Vakuumkammer verbracht wird und dann die Grundstruktur bandförmig mit einem hochspannungsbeschleunigten Elektronenstrahl bei gleichzeitiger kontinuierlicher Relativbewegung desselben auf dem Substrat senkrecht zu einer bandförmigen Erstreckung einer vom Elektronenstrahl auf der Grundstruktur erzeugten Schmelzzone mit einer solchen Energiedichte beaufschlagt wird, daß die Schmelzzone eine Tiefe aufweist, die mindestens einer Stufenhöhe der gestuften Grundstruktur entspricht.

Der Elektronenstrahl wird vorzugsweise mit einer linearen Elektronenstrahlkanone erzeugt, deren Anodenspannung mehrere Kilovolt beträgt, so daß die auf dem Substrat auftreffende Strahlung jeweils derartig viele Sekundärelektronen aus diesem herausschlägt, so daß eine kontinuierliche Ladung des Substrates erfolgt und dieses sich gegenüber der Elektronenquelle auf eine solche Spannung aufläd, die geringer als die Energie der Elektronen des Elektronenstrahls ist. Auf dies Weise läßt sich über die Spannung oder über die Anzahl der in der Elektronenquelle erzeugten Elektronen das Maß der Strahlenergiebeaufschlagung in der Schmelzzone des Substrat genau bestimmen. In Verbindung mit der Vorschubgeschwindigkeit des Substrat quer zur Ausdehnung der Schmelzzone kann die eindringtiefe der Schmelzzone in das Substrat exakt kontrolliert werden. Dies ermöglicht für ein jeweils vorgegebenes Substrat passend zu dessen Schmelz- und Oberflächenspannungsverhältnissen eine geeignete Schmelzzonenbreite und Schmelzzonentiefe zu wählen, die zu einer ganz definierten Einebnung der Stufen führt, welche in dem oder den vorlaufenden Erzeugungsschritten der Grundstruktur entstanden waren.

Die Spannungsverhältnisse zwischen der Anodenspanung und der Spannung, auf die sich das Substrat auflädt, lassen sich vorteilhaft stabilisieren, indem das Substrat auf einem Träger angeordnet wird, der eine um mindestens eine Größenordnung geringere spezifische Leitfähigkeit als das Substrat hat.

Es hat sich als günstig erwiesen, die Schmelzzone etwa 1 bis 5 Stufenhöhen tief und häufig sogar in der Nähe von einer Stufenhöhe zu wählen. Die Breite der Schmelzzone wird im allgemeinen mehrere Stufenhöhen breit ausgelegt, und sie beträgt insbesondere mindestens 2 bis 20 Stufenbreiten.

Eine weitere Variabilität des Prozesses erbringt die Anordnung eines Vorheizmuffelofens in der Vakuumkammer, in dem das Substrat thermostatisch aufgeheizt wird, bevor die Aufschmelzung der Oberfläche erfolgt. Es hat sich als günstig erwiesen, wenn die Aufheiztemperatur etwa 50 bis 100° K unter der Schmelz- oder Erweichungstemperatur des Materials der Grundstruktur liegt. Dies ermöglicht zum Beispiel, daß Auschmelzen von Quarz, mit dem hochwertige Linsen und Linsenanordnungen hergestellt werden können. Auch Metalle, die beispielsweise als optische Spiegel Verwendung finden, lassen sich durch den Elektronenstrahl aufschmelzen, wobei auch hier ein Vorheizen empfehlenswert ist.

Da das Verfahren des Aufschmelzens der Oberfläche und damit der Beseitigung der Stufenstruktur außerordentlich hochwertige Optiken erzeugen läßt, hat es sich als vorteilhaft erwiesen, diejenigen Abweichung von der Idealform, welche bei der Ätzung und bei der progressiven Zonenschmelzung entstehen, jeweils bei der Erzeugung der Masken korrigierend zu berücksichtigen. So wird ein Unterätzzuschlag entlang der Konturen vorgesehen und eine richtungsorientierte Vorverzerrung in die Masken eingebracht, welche bei dem Aufschmelzen zur Beseitigung der fertigungsbedingten Fehler führt.

Der Maskierungs- und Ätzschritt beziehungsweise eine vielfältige Folge von diesen lassen sich mit den üblichen Methoden der Fotolithographie, der Laserbelichtung des Maskenmaterials oder einer Elektronenstrahlbelichtung des Maskenmaterials durchführen, worauf der Ätzschritt, je nach der Art des Substrats und der geforderten Präzision mit einem flüssigen oder gasförmigen Ätzmittel, insbesondere auch durch eine Plasmaätzung und Ionenätzung vorgenommen werden kann. Prinzipiell ist auch eine Erstellung der Grundstruktur durch mechanische Bearbeitung herzustellen

Das Verfahren eignet sich insbesondere auch zur Erzeugung einer konfokalen Planarlinsenanordnung, deren Stufen durch den Schmelzschritt so definiert abgeschrägt und kanten- und fußseitig abgerundet werden, daß die störenden Einflüsse der Stufenstirnflächen sowie gegebenenfalls der Unterätzstörungen beseitigt werden.

Die durch das Verfahren gewährleistete hohe Gleichmäßigkeit der optischen Daten der erzeugten Linsen eines Linsenarrays ermöglicht es, ein solches konfokal für alle Linsen zu gestalten, indem die einzelnen Linsen diesbezüglich asphärisch ausgebildet werden und in dem Schmelzschritt bezüglich der optischen Fehler korrigiert werden. Hierdurch lassen sich optische Systeme schaffen die nahezu die Apertur 1 aufweisen, was bei konventionell hergestellten Einzellinsen sehr schwierig ist.

Die neuartigen Linsen oder Linsenstrukturen lassen sich vorteilhaft als Kompensations- oder Korrekturlinsen, wie bekannt, auf einer Planfläche einer refraktiven Linse aufbringen. Durch das glättende Schmelzverfahren nach der Erfindung werden die der geätzten Stufenstruktur kontrastmindernde Eigenschaften beseitigt oder weitgehend veringert, so daß eine wesentlich geringere Stufenzahl zur Erreichung gleicher Qualtiät ausreicht. Im allgemeinen genügt eine einzige Stufe.

Die Korrekturlinse läßt sich auch auf einer separaten Platte vor oder nach der refraktiven Linse anordnen. Die Verwendung von Korrekturlinsen ist vorteilhaft auch in Verbindung mit hochwertigen Einzellinsen vorzusehen, die nach ihrer Herstellung vermessen werden, wozu zum Beispiel ein Laserscanner eingesetzt wird, dessen Abbildungsfehler systematsich ausgewertet werden. Mit den gewonnenen Meßdaten wird eine für den Einzelfall korrigierende Linsenstruktur berechnet und danach der Maskensatz hergestellt, der der Korrekturlinsenerzeugung dient. Auch hierbei wird durch die nachträgliche Verschmelzung der Stufen bei der oberflächlichen Schmelzung eine streuarme Korrekturlinse mit wenigen Maskierungs- und Ätzschritten herstellbar. Durch die Verschmelzung entstehen wellenförmige Profilierungen der flachen Strukturen. Die optischen Eigenschaften solcher Strukturen lassen sich mathematisch gut beschreiben, und somit ist die Maskenberechnung mit hoher Genauigkeit durchführbar, da die Strukturveränderung durch die Verschmelzung der Stufen vorherbestimmbar und in der Berechnung zu berücksichtigen ist.

Außer auf Linsen läßt sich die Kombination des vermessenen Systems mit Korrekturplatten oder -strukturen auf planen Flächen auch auf andere optische Systeme, zum Beispiel Prismen oder Prismenarrays anwenden.

Vorteilhaft lassen sich auch mit dem erfindungsgemäßen Verfahren Oberflächenlichtwellenleiteroptiken ausbilden. So können in das Oberflächenlichtwellenleitersubstrat konfokale sektorförmige Strukturen oder auch linsenförmige Ausnehmungen eingebracht werden, deren Fokus in dem Oberflächenlichtwellenleiter liegt und beispielsweise auf einen fadenförmigen oder streifenförmigen schmalen Lichtwellenleiter oder Lichtwellenleiterabschnitt orientiert ist.

Auch Spiegeloberflächen von Hohlspiegeln, Hohlspiegelarrays, optischen Gittern usw. lassen sich mit dem Verfahren erzeugen. Die Struktur läßt sich unmittelbar in hochwertig reflektierenden Metalloberflächen, zum Bespiel aus Silber oder Chrom einbringen, oder sie können auf einem Material erzeugt werden, das sich nachträglich verspiegeln läßt. Vorteilhaft kann eine Vakuumverspiegelung der Oberfläche vorgenommen werden, indem das Substrat nach dem Abschluß des Aufschmelzvorganges einer Bedampfungsvorrichtung in der Vakuumkammer zugeführt wird.

Die Vorrichtung zur Durchführung des Verfahrens ist vorzugsweise für mehrere Substrate ausgelegt, die nacheinander einen Muffelofen durchlaufen, welcher die Vorheizung vornimmt, und dann an dem Elektronenstrahler vorbeigeführt werden. Der Substrattransport ist geregelt angesteuert, ebenso wie die verschiedenen Elektroden und Elektronenquelle geregelt von einer Steuervorrichtung versorgt sind. Für die Regelung hat es sich als vorteilhaft erwiesen, ein Meßsignal eines Strahlungsensors, welcher auf die Schmelzzone gerichtet ist, mit einem vorgegebenen Strahlungswert zu vergleichen und die Regelung derart vorzunehmen, daß die Differenz der beiden Werte möglichst null ist.

Vorteilhafte Ausgestaltungen sind in den Figuren 1 bis 5 dargestellt.
- Fig. 1: zeigt den Verfahrensablauf schematisch;
- Fig. 2: zeigt einen Querschnitt einer Vorrichtung zur Durchführung des Verfahrens;
- Fig. 3: zeigt einen Querschnitt durch ein Substrat;
- Fig. 4: zeigt eine Aufsicht auf einen Oberflächenlichtwellenleiter mit einer optischen Struktur;
- Fig. 5: zeigt ein optisches System, das eine Korrekturplatte enthält.

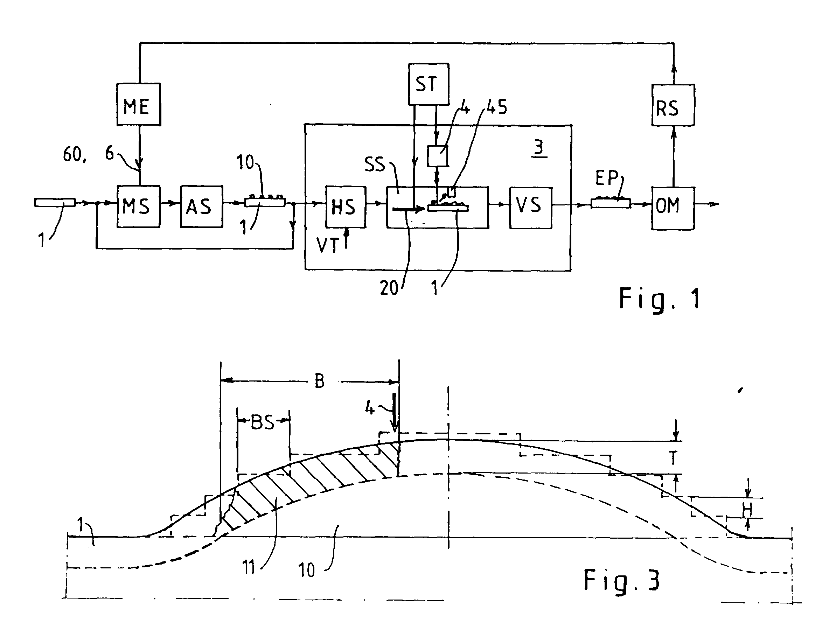

Figur 1 zeigt ein Schema des Verfahrensablaufs. Das Substrat (1) wird in einem ersten Maskierungsschritt (MS) beschichtet, belichtet und geöffnet und in einem anschließenden Ätzschritt (AS) stufenförmig ausgeätzt. Für planare Strukturen genügt ein Maskierungsschritt und Ätzschritt; für mehrdimensionale Strukturen müssen diese beiden Schritte mit entsprechenden Masken mehrfach wiederholt werden. Das Substrat (1) mit der so erzeugten Grundstruktur (10) wird in dem anschließenden Schmelzschritt (SS) geglättet. Dem Schmelzschritt (SS) kann ein Vorheizschritt (HS) vorgelagert sein, indem das Substrat (1) mit der Grundstruktur (10) auf eine Vorheiztemperatur (VT) erwärmt wird, die nahe der Schmelz- oder Erweichungstemperatur der Grundstruktur liegt.

Der Schmelzschritt erfolgt unter Regelung der Elektronenstrahlenergiedichte, sowie der Vorschubgeschwindigkeit des Substrats (1) senkrecht zur Erstreckung der Schmelzzone. Als Kontrollgröße wird mit einem Strahlungssensor (45) die Temperatur der Schmelzzone gemessen und einer Steuervorrichtung (ST) als Ist-Größe zugeführt. Der Schmelzschritt (SS) wird in einer Vakuumkammer (3) ausgeführt. Diese steuert die Elektronenkanone sowie den Vorschubantrieb der Substratfördervorrichtung (20). Sofern die optische Struktur aus Spiegelelementen besteht, folgt auf den Schmelzschritt (SS) ein Verspiegelungsschritt (VS), der vorzugsweise in einer Vakuumkammer durch Metallbedampfung erfolgt.

Aufgrund einer optischen Vermessung (OM) der optischen Daten des Endproduktes (EP) werden die jeweiligen Abweichungen von einer Idealform bestimmt und über einen Rechenschritt (RS) korrigierend in einen Maskenherstellungsschritt (ME) für die Herstellung der Masken (6) berücksichtigt.

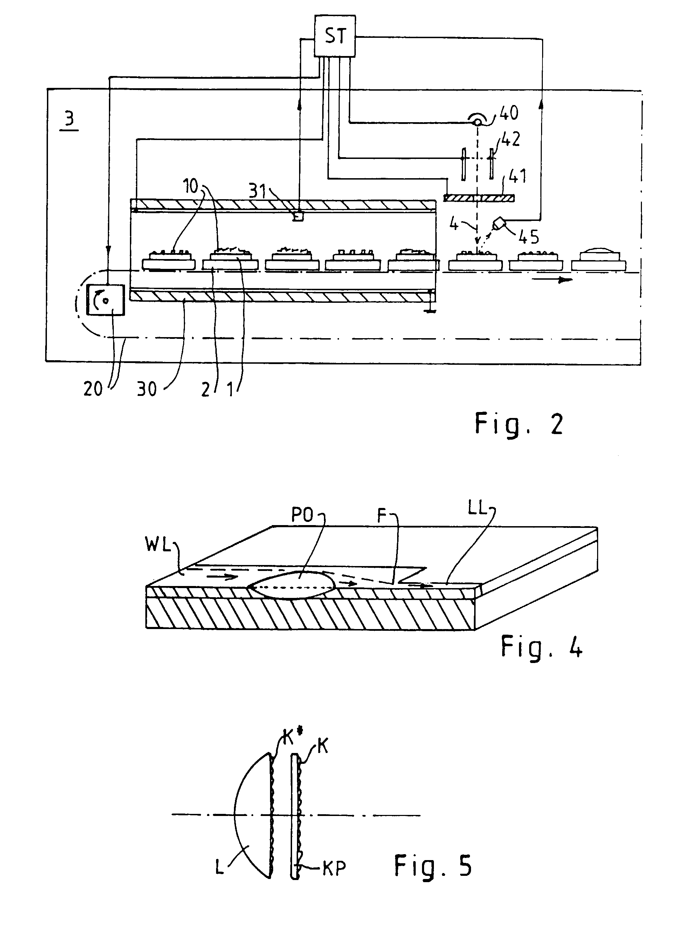

Figur 2 zeigt die Vorrichtung zur Durchführung des Schmelzschrittes. Sie besteht aus einer Vakuumkammer (3), welche eine Fördervorrichtung (20) umschließt, die in einer Substratebene Träger (2) fördert, auf denen die Substrate (1) angeordnet sind. Die Träger (2) bestehen vorzugsweise aus hochisolierendem Aluminiumoxid. Die Träger und Substrate sind von einem Muffelofen (30) umschlossen, welcher geöffnet dargestellt ist. Dieser ist thermostatisch geregelt elektrisch beheizt. Endseitig des Muffelofens (30) treten die Träger (2) mit den Substraten (1) in den Bereich des Elektronenstrahles (4). Der Elektronenstrahlgenerator ist senkrecht zur seiner Erstreckung geschnitten dargestellt. Die Elektronen werden in einem Heizdraht, der als Elektronenquelle (40) dient, freigesetzt und zu einer geschlitzten Anode (41) hin beschleunigt. Die Anode ist mit einer geregelten Hochspannung von einigen Kilovolt beaufschlagt. Auf dem Weg zur Anode (41) passieren die Elektronen seitliche Fokussierelektroden (42), welche von einer Fokussierspannung beaufschlagt sind. Die beschleunigten Elektronen treten als lineare Elektronenstrahl (4) aus dem Anodenschlitz aus und beaufschlagen das darunterliegende Substrat mit der darauf befindlichen Grundstruktur (10).

Oberhalb der Schmelzzone, die im Bereich des Auftreffens des Elektronenstrahls (4) auf das Substrat (1) entsteht, ist ein Strahlungsdetektor (45) angeordnet, dessen Ausgangssignal einer Steuervorrichtung (ST) zugeführt ist. Diese steuert die Hochspannung, die Fokussierspannung, den Strom der Elektronenquelle sowie die Vorschubgeschwindigkeit der Fördervorrichtung (20). Zweckmäßig läßt sich auch die elektrische Beheizung des Muffelofens (30) über die Steuervorrichtung (ST) regeln, wobei das Signal eines Temperatursensors (31), der Steuervorrichtung als Ist-Signal zugeführt wird.

Figur 3 zeigt stark vergrößert einen vertikalen Schnitt durch ein Substrat, welches eine Linse trägt. Die Grundstruktur (10) der Linse ist gestrichelt gezeichnet und weist Stufen mit einer Stufenhöhe (H) auf. Weiterhin ist eine Schmelzzone (11) dargestellt, die durch die Beaufschlagung mit dem Elektronenstrahl (4) während des kontinuierlichen Durchlaufs des Substrats entsteht. Diese Schmelzzone (11) weist eine Tiefe (T) auf, die etwa 1,5 Stufenhöhen (H) entspricht und weist eine Breite (B) auf, welche in diesem Beispiel 3 mittlere Stufenbreiten (BS) überdeckt. Die endgültige Gestalt des optischen Elementes ist durchgezogen gezeichnet. Sie ergibt sich bei der Aufschmelzung des oberflächlichen Materials durch die Oberlfächenspannung der Schmelze. Die Oberflächenspannung egalisiert und beseitigt die Stufenstruktur und erbringt eine annähernd ideale optische Oberfläche. Man erkennt an den Stufen, daß diese eine leichte Unterätzung aufweisen, die jedoch nach dem Aufschmelzen völlig beseitigt ist.

Figur 4 zeigt im Schnitt und perspektivisch eine planare Optik (PO) in einem Lithiumniobatkristall, in dem ein Oberflächenlichtwellenleiter (WL) ausgebildet ist. Die optische Anordnung ist konfokal auf den Fokus (F) ausgerichtet. Dieser liegt in diesem Beispiel am Rand des Kristalls, wo ein schmales Lichtleiterband (LL) angeschlossen ist.

Figur 5 zeigt eine refraktive plankonvexe Linse (L) auf deren Planseite eine Kompensations- oder Korrekturstruktur (K*) gemäß dem Verfahren erzeugt ist, die durch die Verschmelzung etwa welllenförmig ausgebildet ist. Die Kompensationsstruktur (K*) ist eine Planarlinse, die einen umgekehrten Farbkoeffizienten wie die refraktive Linse (L) aufweist, so daß eine breitbandige Farbkorrektur wegen der Wellenstruktur mit geringen Streuverlusten erreicht ist. Alternativ ist eine Korrekturstruktur (K) oder Kompensationsstuktur auf einer Korrekturplatte (KP) erzeugt, die der Linse (L) oder ggf. mehreren Linsen eines Systems vor- und/oder nachgeordnet ist.

## Patentansprüche

1. Verfahren zur Herstellung optisch wirksamer Strukturen, insbesondere von Linsen und Linsenarrays sowie Prismen, bei dem in mindestens einem Maskierungsschritt (HS) mit anschließendem Ätzschritt (AS) eine stufenförmige optisch wirksame Grundstruktur (10) auf einem Substrat (1) oberflächlich ausgebildet wird, die anschließend in einem Schmelzschritt (SS) durch eine Erwärmung bis zum Schmelzen durch kapillare Oberflächenkräfte des geschmolzenen Substrats geglättet wird,
dadurch gekennzeichnet, daß in dem Schmelzschritt (SS) das Substrat (1), das die Grundstruktur (10) trägt, in eine Vakuumkammer (3) verbracht wird und dann die Grundstruktur (10) bandförmig mit einem hochspannungsbeschleunigten Elektronenstrahl (4) bei gleichzeitiger kontinuierlicher Relativbewegung desselben auf dem Substrat (1) senkrecht zu einer bandförmigen Erstreckung einer vom Elektronenstrahl (4) auf der Grundstruktur (10) erzeugten Schmelzzone (11) mit einer solchen Energiedichte beaufschlagt wird, daß die Schmelzzone (11) eine Tiefe (T) aufweist, die mindestens einer Stufenhöhe (H) der gestuften Grundstruktur (10) entspricht.

2. Verfahren nach Anspruch 1, dadurch gekennzeichnet, daß der Elektronenstrahl 4) mit einer Beschleunigungsspannung von mehreren, z.B. 2 bis 5 kV, Kilovolt, beaufschlagt ist.

3. Verfahren nach Anspruch 1, dadurch gekennzeichnet, daß die Tiefe (T) der Schmelzzone 1 bis 5, insbesondere 1 bis 2,5, Stufenhöhen (H) entspricht.

4. Verfahren nach einem der vorstehenden Ansprüche, dadurch gekennzeichnet, daß der Elektronenstrahl (4) derart bandförmig auf die Grundstruktur (10) fokussiert ist, daß die von ihm beaufschlagte Schmelzone (11) eine Breite (B) aufweist, die mindestens 2 mittleren Stufenbreiten (BS), entspricht.

5. Verfahren nach einem der vorstehenden Ansprüche, dadurch gekennzeichnet, daß das Substrat (1) auf dem Träger (2) in der Vakuumkammer (3) in einem Vorheizschritt (HS) auf eine Vorheiztemperatur (VT) vorgeheizt wird, die weniger als 100° K, insbesondere 50° K, unter der Schmelz- oder Erweichungstemperatur des Materials der Grundstruktur (10) liegt.

6. Verfahren nach einem der vorstehenden Ansprüche, dadurch gekennzeichnet, daß die Maske (6), die in dem Maskierungsschritt (MS) benutzt wird, bei der Maskenerstellung (ME) derart orientiert mit einer derart vorverzerrten vorgegebenen Grundform hergestellt ist, daß bei dem gleichorientierten Durchlauf der Schmelzzone (11) die damit erzeugte vorverzerrte Grundstruktur (10) der vorgegebenen Grundform gemäß entzerrt wird.

7. Verfahren nach einem der vorstehenden Ansprüche, dadurch gekennzeichnet, daß jeder Maskierungsschritt (MS) mittels photolithografisch, mittels Laserbelichtung oder mittels Elektronenstrahlbelichtung ausgeführt ist und der anschließende Ätzschritt (AS) mit einem flüssigen oder gasförmigen Ätzmittel, insbesondere mit Plasmaätzung oder Ionenstrahlätzung, erfolgt.

8. Verfahren nach einem der vorstehenden Ansprüche, dadurch gekennzeichnet, daß bei der Maskenerstellung (ME) eine Maske (6) einer vorgegebenen Idealform entspricht und an ihren Konturen umlaufend mit einem Unterätzzuschlag ergänzt ist, so daß beim Aufschmelzen einer damit maskierten und danach geätzten Grundstruktur (10) ein der Idealform gemäßes strukturiertes optisches Element entsteht.

9. Verfahren nach einem der vorstehenden Ansprüche, dadurch gekennzeichnet, daß in nur einem Maskierungsschritt (MS) und einem nachfolgenden Ätzschritt mindestens eine konfokale Planarlinsenanrodnung erzeugt wird, deren Stufen in dem nachfolgenden Schmelzschritt (SS) abgeschrägt und kanten- und fußseitig gerundet werden.

10. Verfahren nach einem der vorstehenden Ansprüche, dadurch gekennzeichnet, daß eine gegebene Linse (L) oder ein anderes optisches System vermessen wird und abhängig von dessen optischen Fehlern, zum Beispiel der chromatischen Aberration, eine Maske oder eine Gruppe von Masken (60) errechnet und danach erzeugt wird, die der Struktur einer Korrektur- oder Kompensationsoptik (K, K*) entsprechen, worauf mit diesen Masken (60) die Kompensationsoptik (K*) mit Verfahrensschritten der Maskierungsschritt (MS), Ätzschritt (AS) auf einer planaren Oberfläche der Linse (LL) oder auf einer Korrekturoptikplatte (KP) erzeugt wird.

11. Verfahren nach einem der vorstehenden Ansprüche, dadurch gekennzeichnet, daß in den Maskierungs- und Ätzschritten (MS, AS) eine Linsenarray-Grundstruktur erzeugt wird, deren einzelnen Linsen jeweils auf einen gemeinsamen Fokus des Linsenarrays hin orientiert asphärisch ausgebildet werden und danach in dem nachfolgenden Schmelzschritt (SS) in die jeweilige asphärischen Idealform gebracht werden.

12. Verfahren nach einem der Ansprüche 1 bis 9, dadurch gekennzeichnet, daß die Grundstruktur in einen Oberflächenlichtwellenleiter (WL), z.B. Lithiumniobat, eingeätzt ist und eine konfokale sektorförmige oder linsenförmige Gestalt aufweist, deren Fokus (F) in dem Oberflächenlichtwellenleiter (WL) liegt.

13. Verfahren nach einem der Ansprüche 1 bis 8, dadurch gekennzeichnet, daß die optisch wirksame Struktur als eine Spiegeloberfläche auf einem metallischen Substrat (1) erzeugt wird, das beispielsweise aus Silber oder Chrom besteht oder nach dem Schmelzschritt (SS) in einem verspiegelungsschritt (VS), vorzugsweise durch eine vakuumverspiegelung, verspiegelt wird.

14. Verfahren nach einem der Ansprüche 1-13, dadurch gekennzeichnet, daß das Substrat aus Quarz oder Glas besteht und die Grundstruktur (10) derart ausgebildet ist, daß ein Linsenarray entsteht, welches aus konfokal ausgerichteten asphärischen Linsen besteht.

15. Vorrichtung zur Durchführung des Verfahrens nach einem der Ansprüche 1 bis 13, dadurch gekennzeichnet, daß für die Durchführung des Schmelzschrittes (SS) in der vakuumkammer (3) zur Erzeugung des Elektronenstrahles (4) eine bandförmige Elektronenquelle (40) mit einer nachgeordneten geschlitzten hochspannungsbeaufschlagten, geschlitzten Anode (41) und seitlichen fokussierungsspannungsbeaufschlagten Fokussierelektroden (42) senkrecht beabstandet zu einer Substratebene angeordnet ist, in der der Träger (2) mit mindestens einem Substrat (1) anzuordnen und in dieser durch eine Fördervorrichtung (20) vorschubgesteuert verschiebbar ist.

16. Vorrichtung nach Anspruch 15, dadurch gekennzeichnet, daß in der Vakuumkammer (3) ein Muffelofen (30) angeordnet ist, der thermostatisch geregelt elektrisch beheizt ist, und in dem mindestens ein Substrat (1) anzuordnen ist.

17. Vorrichtung nach Anspruch 16, dadurch gekennzeichnet, daß der Muffelofen (30) die Fördervorrichtung (20) umschließt.

18. Vorrichtung nach Anspruch 16 oder 17, dadurch gekennzeichnet, daß der Elektronenstrahl (4) in den Muffelofen (30) eingestrahlt wird oder in ihm erzeugt wird.

19. Vorrichtung nach einem der Ansprüche 16 bis 18, dadurch gekennzeichnet, daß benachbart zur Schmelzzone (11) ein Strahlungsdetektor (45) angeordnet ist, dessen Strahlungssignal einer Steuervorrichtung (ST) zugeführt ist, mit dem diese die Hochspannung der Anode (41), einen Heizstrom (IH) der Elektronenquelle (40) und/oder die Vorschubgeschwindigkeit der Fördervorrichtung (20) bezüglich eines vorgegebenen Strahlungswertes (SW) regelnd ansteuert.

## Claims

1. Method of manufacturing optically active structures, in particular of lenses and lens arrays as well as prisms, in which in at least one masking stage (HS) with a subsequent etching stage (AS) a step-shaped optically active basic structure (10) is formed on the surface of a substrate (1), which is then smoothed in a melting stage (SS) by heating to melting point by capillary surface forces of the molten substrate, characterised in that in the melting stage (SS) the substrate (1) carrying the basic structure (10) is brought into a vacuum chamber (3) and then the basic structure (10) is acted on in a band-like manner with a high-voltage accelerated electron beam (4) with simultaneous continuous relative motion thereof on the substrate (1) perpendicular to a strip-shaped extension of a melting zone (11) generated by the electron beam on the basic structure (10) with such an energy density that the melting zone (11) has a depth (T) which corresponds at least to a step height (H) of the stepped basic structure (10).

2. Method according to claim 1, characterised in that the electron beam (4) is acted on by a plurality of kilovolts, e.g. 2 to 5 kV.

3. Method according to claim 1, characterised in that the depth (T) of the melting zone is equal to 1 to 5, in particular 1 to 2.5 times the step height (H).

4. Method according to one of the preceding claims, characterised in that the electron beam (4) is focused in a band-shaped manner on the basic structure (10) so that the melting zone (11) acted on has a breadth (B) which is at least twice the average step width (BS).

5. Method according to one of the preceding claims, characterised in that the substrate (1) on the support (2) in the vacuum chamber (3) is preheated in a preheating stage (HS) to a preheated temperature (VT) which is less than 100°K, in particular 50°K below the melting or softening temperature of the material of the basic structure (10).

6. Method according to one of the preceding claims, characterised in that the mask (6) used in the masking stage (MS) is so oriented in manufacture (ME) with a specified basic shape in which it is pre-distorted, that upon passing through the melting zone (11) with the same orientation the pre-distorted basic structure (10) thus generated is straightened out in accordance with the specified basic shape.

7. Method according to one of the preceding claims, characterised in that each masking stage (MS) is carried out by means of photolithography, laser exposure or electron beam exposure and the subsequent etching stage (AS) is effected with a liquid or gaseous etching agent, in particular by plasma etching or ion beam etching.

8. Method according to one of the preceding claims, characterised in that in the mask manufacture (ME) a mask (6) corresponds to a specified ideal shape and is continuously completed at its contours with a sub-etching aggregate, so that upon melting on of a basic structure (10) masked therewith and then etched, an optical element structured according to the ideal shape is obtained.

9. Method according to one of the preceding claims, characterised in that in only one masking stage (MS) and a subsequent etching stage at least one confocal planar lens arrangement is generated, whose steps are chamfered in the subsequent melting stage (SS) and are rounded at the edges and base.

10. Method according to one of the preceding claims, characterised in that a specified lens (L) or a different optical system is measured and depending on its optical faults, e.g. the chromatic aberration, a mask or a group of masks (60) are calculated and then produced, which correspond to the structure of an optical correction or compensation element (K, K*), whereupon with these masks (60) the optical compensation element (K*) is generated with the process stages of the masking stage (MS), etching stage (AS) on a planar surface of the lens (LL) or on an optical correction plate (KP).

11. Method according to one of the preceding claims, characterised in that in the masking and etching stages (MS. AS) a lens array basic structure is generated, whose individual lenses are each formed aspherically oriented on a common focus of the lens array and are then brought into the respective aspherical ideal shape in the subsequent melting stage (SS).

12. Method according to one of claims 1 to 9, characterised in that the basic structure is etched in a surface wave guide (WL), e.g. lithium niobate, and has a confocal sector-shaped or lens-shaped form whose focus (F) lies in the surface wave guide (WL).

13. Method according to one of claims 1 to 8, characterised in that the optically active structure is formed as a mirror surface on a metal substrate (1), which consists of silver or chromium for example or is metallised after the melting stage (SS) in a metallising stage (VS), preferably by a vacuum metallising process.

14. Method according to one of claims 1-13, characterised in that the substrate consists of quartz or glass and the basic structure (10) is so formed that a lens array is formed consisting of confocally oriented aspherical lenses.

15. Apparatus for carrying out the method according to one of claims 1 to 13, characterised in that for carrying out the melting stage (SS) in the vacuum chamber (3) for generating the electron beam (4) a band-shaped electron source (40) is disposed with a slotted high-voltage anode (41) and lateral focusing electrodes (42) acted on by a focusing voltage and vertically spaced relative to a substrate plane in which the support (2) having at least one substrate (1) is to be disposed and is slidable therein by forward feed by a conveyor device (20).

16. Apparatus according to claim 15, characterised in that in the vacuum chamber (3) a muffle furnace (30) is disposed, which is electrically heated with thermostatic control and in which at least one substrate (1) is to be disposed.

17. Apparatus according to claim 16, characterised in that the muffle furnace (30) encloses the conveyer device (20).

18. Apparatus according to claim 16 or 17, characterised in that the electron beam (4) is aimed into the muffle furnace (30) or is generated therein.

19. Apparatus according to one of claims 16 to 18, characterised in that adjacent to the melting zone (11) is a radiation detector (45) whose radiation signal is fed to a control device (ST) with which this device controls the high voltage of the anode (41), a heating current (IH) of the electron source (40) and/or the forward feed speed of the conveyor device (20) with respect to a specified radiation value (SW).

## Revendications

1. Procédé de fabrication de structures optiques, notamment de lentilles et d'arrays de lentilles ainsi que de prismes, dans le cadre duquel une structure fondamentale optique étagée (10) est formée superficiellement sur un substrat (1) au cours d'au moins une étape de masquage (HS) suivie d'une étape de corrosion (AS), cette structure fondamentale (10) étant finalement lissée au cours d'une étape de fusion (SS) par échauffement jusqu'à fusion sous l'effet de l'énergie superficielle, capillaire du substrat fondu,
caractérisé en ce que,
lors de l'étape de fusion (SS), le substrat (1), qui porte la structure fondamentale (10), est amené dans une chambre à vide (3), ce après quoi la structure fondamentale (10) est soumise, en forme de bande, à un faisceau électronique (4) accéléré à haute tension, simultanément en mouvement relatif continu, perpendiculairement à une zone de fusion s'étendant en forme de bande et produite par le faisceau électronique (4) sur la structure fondamentale (10), avec une telle densité de flux d'énergie que la zone de fusion (11) présente une profondeur (T) correspondant au moins à la hauteur d'un niveau (H) de la structure fondamentale étagée (10).

2. Procédé selon la revendication 1,
caractérisé en ce que
le faisceau électronique (4) est soumis à une tension d'accélération de plusieurs kilovolts, par exemple: 2 à 5 kV.

3. Procédé selon la revendication 1,
caractérisé en ce que
la profondeur (T) de la zone de fusion correspond à 1 à 5, particulièrement 1 à 2,5, hauteurs de niveaux (H).

4. Procédé selon l'une des revendications précédentes,
caractérisé en ce que
le faisceau électronique (4) est focalisé en forme de ruban sur la structure fondamentale (10) de sorte que la zone de fusion (11) attaquée par lui présente une largeur (B) correspondant à au moins 2 largeurs moyennes de niveaux (BS).

5. Procédé selon l'une des revendications précédentes,
caractérisé en ce que
le substrat (1) est préchauffé sur le support (2), dans la chambre à vide (3), au cours d'une étape de préchauffage (HS), pour être amené à une température de préchauffage (VT) inférieure de moins de 100° K, tout particulièrement de 50° K, à la température de fusion ou de ramollissement de la matière qui constitue la structure fondamentale (10).

6. Procédé selon l'une des revendications précédentes,
caractérisé en ce que,
pendant l'opération de réalisation du masque (ME), l'orientation du masque (6), utilisé au cours de l'étape de masquage (MS), et la distorsion de sa forme de base prédéterminée sont telles que, lors du passage pareillement orienté de la zone de fusion (11) ainsi obtenue, la structure fondamentale (10) prédis tordue est redressée conformément à la forme de base prédéfinie.

7. Procédé selon l'une des revendications précédentes,
caractérisé en ce que
chaque étape de masquage (MS) est exécutée par recours à une lumination photolithographique ou à une lumination par rayon laser ou faisceau électronique et
que l'étape de corrosion (AS), qui y fait suite, est exécutée à l'aide d'un agent corrosif liquide ou gazeux, tout particulièrement à l'aide de plasma ou d'un faisceau ionique.

8. Procédé selon l'une des revendications précédentes,
caractérisé en ce que,
lors de l'opération de réalisation de masque (ME), un masque (6) correspond à une forme idéale prédéfinie et est complété, le long de ses contours, par un supplément subcorrosif de sorte que, lors de la fusion d'une structure fondamentale (10) ainsi masquée, puis corrodée, un élément optique, structuré selon la forme idéale soit obtenu.

9. Procédé selon l'une des revendications précédentes,
caractérisé en ce que,
dans une seule étape de masquage (MS) et une étape de corrosion y faisant suite, au moins un arrangement de lentille planaire à foyer commun, dont les étages sont biaisés et arrondis sur les bords et les semelles au cours de l'étape de fusion (SS) faisant suite, est réalisé.

10. Procédé selon l'une des revendications précédentes,
caractérisé en ce que
une certaine lentille ou un autre système optique est mesuré et qu'en dépendance de ses défauts optiques, comme, par exemple, une aberration chromatique, un masque ou un groupe de masques (60) est calculé, puis réalisé, lequel correspond à la structure d'une optique de correction ou de compensation (K, K*), ce, à la suite de quoi, l'optique de compensation (K*) est réalisée, avec ces masques (60), sur une surface planaire de la lentille (LL) ou sur une plaque d'optique de correction (KP), dans le cadre des étappes de masquage (MS), de corrosion (AS) selon le procédé.

11. Procédé selon l'une des revendications précédentes,
caractérisé en ce que,
lors des étapes de masquage et de corrosion (MS, AS) une structure fondamentale d'arrays de lentille est réalisée, structure fondamentale dont les différentes lentilles, orientées sur un foyer commun, sont conçues non-sphériquement, puis amenées à la forme non-sphérique idéale, respective, au cours de l'étape de fusion (SS) faisant suite.

12. Procédé selon l'une des revendications 1 à 9,
caractérisé en ce que
la structure fondamentale est corrodée dans un guide d'ondes lumineuses de surface (WL), par ex.: niobate de lithium, et présente une forme de secteurs ou de lentilles à foyer commun, dont le foyer (F) est situé dans le guide d'ondes lumineuses de surface (WL).

13. Procédé selon l'une des revendications 1 à 8,
caractérisé en ce que
la structure optique est réalisée en tant que surface spéculaire sur un substrat métallique (1), en argent ou en chrome, par exemple, ou est rendue spéculaire, après l'étape de fusion (SS), au cours d'une étape de spécularisation (VS), de préférence sous vide.

14. Procédé selon l'une des revendications 1 à 13,
caractérisé en ce que
le substrat consiste en quartz ou en verre et que la structure fondamentale (10) est conçue de sorte qu'il en résulte un arrangement de lentilles non-sphériques à foyer commun.

15. Dispositif pour l'exécution du procédé selon l'une des revendications 1 à 13,
caractérisé en ce que,
pour la réalisation de l'étape de fusion (SS), dans la chambre de vide (3), un émetteur électronique (40) en forme de bande, destinée à la géneration du faisceau électronique, est disposé dans la chambre à vide (3), avec une anode fendue (41), soumise à haute tension et située en aval de l'émetteur électronique.

16. Dispositif selon la revendication 15,
caractérisé en ce que,
dans la chambre à vide (3), un four à moufle (30) est installé, lequel, réglé par thermostat, est chauffé électriquement et dans lequel un substrat (1), au moins, est à disposer.

17. Dispositif selon la revendication 16,
caractérisé en ce que
le four à moufle (30) cerne le dispositif de transport (20).

18. Dispositif selon la revendication 16 ou 17,
caractérisé en ce que
le faisceau électronique (4) est amené à rayonner dans le four à moufle (30) ou est produit dans celui-ci.

19. Dispositif selon l'une des revendications 16 à 18,
caractérisé en ce qu'
un détecteur de rayonnements (45) est disposé à proximité de la zone de fusion (11), son signal étant conduit à un dispositif de commande (ST) qui règle ainsi la haute tension de l'anode (41), un courant de chauffage (IH) de l'émetteur électronique (49) et/ou la vitesse d'avance du dispositif de transport (20) en fonction d'une valeur de rayonnement de consigne (SW).
